Europäisches Patentamt

European Patent Office

Office européen des brevets

(11) Veröffentlichungsnummer: **0 041 227**
**B1**

(12) **EUROPÄISCHE PATENTSCHRIFT**

(45) Veröffentlichungstag der Patentschrift:
**16.01.85**

(51) Int. Cl.⁴: **A 22 B 5/16**

(21) Anmeldenummer: **81104061.7**

(22) Anmeldetag: **27.05.81**

(54) Schneidgerät zum Abhäuten von Schlachttieren.

(30) Priorität: **02.06.80 DE 3020878**

(43) Veröffentlichungstag der Anmeldung:
**09.12.81 Patentblatt 81/49**

(45) Bekanntmachung des Hinweises auf die Patenterteilung:
**16.01.85 Patentblatt 85/3**

(84) Benannte Vertragsstaaten:
**AT BE CH DE FR GB IT LI LU NL SE**

(56) Entgegenhaltungen:
**DE - B - 1 199 156**
**DE - B - 1 268 512**
**DE - C - 674 322**
**FR - A - 1 023 780**
**FR - A - 2 011 615**
**US - A - 3 857 177**

(73) Patentinhaber: **Schmid & Wezel, D-7133 Maulbronn (DE)**

(72) Erfinder: **Wetzel, Ludwig, Wolfsbergallee 62,**
**D-7530 Pforzheim (DE)**
Erfinder: **Mammel, Erich, Raith 17,**
**D-7130 Mühlacker 7 (DE)**

(74) Vertreter: **Dreiss, Uwe, Dr. jur. Dipl.-Ing. M.Sc. et al,**
**Patentanwälte Dreiss, Hosenthien & Fuhlendorf**
**Gerokstrasse 6, D-7000 Stuttgart 1 (DE)**

## Beschreibung

Diese Erfindung betrifft ein Schneidgerät zum Abhäuten von Schlachttieren mit einem Kopfstück an einem Handgriff, in dem zwei kreisscheibenförmige Trennscheiben, die an ihrem Umfang mit gegeneinander gedrückten Schneidzähnen versehen sind, gelagert sind, im Bereich des Kopfstükkes zwei ineinander kämmende Kegelräder vorgesehen sind, von denen eines mit einem motorischen Antrieb verbunden ist und das andere auf einer auf Wälzlagern gelagerten Exzenterwelle sitzt, die senkrecht zur Mittelebene des Handgriffes angeordnet ist, die wieder zusammenfällt mit der Mittelebene der Trennscheiben, wobei die Exzenterwelle zwei Zapfen, einen Exzenter und einen Bund zwischen dem Exzenter und dem einen Zapfen trägt, auf diesem letzteren Zapfen drehsicher das eine Kegelrad angeordnet ist, wobei von der Exzenterwelle zwei Hebel ausgehen, die die Trennscheiben in hin- und hergehende Kreisbewegungen versetzen und mit einer als Teil eines Gehäuses ausgebildeten Trennwand für eine Abdichtung zwischen dem Getriebe und den Trennscheiben mit einem mit einer Schraube fixierbaren Deckel, der die Trennscheiben teilweise abdeckt und axial sichert, wobei die Trennwand aus einer etwa in der Kopfstückmitte liegenden Mittelplatte und einer dazu etwa senkrecht stehenden Begrenzungswand besteht und zwei Deckel vorgesehen sind, von denen einer über Schrauben mit der Mittelplatte verbunden ist und ein weiteres Lager für die Exzenterwelle trägt und der andere Deckel an der Begrenzungswand anliegt und durch die Schraube gegen die eine Seite eines Distanzringes gedrückt ist, an dessen Umfang die Trennscheiben gelagert sind, wobei ferner im Gehäuse mindestens eines der Kegelräder und ein Ende der Exzenterwelle gelagert sind.

Aus der DE-B-1 268 512 ist ein solches Schneidgerät zum Abhäuten von Schlachttieren bekannt, bei dem die Trennwand als Getriebegehäusesteg ausgebildet ist, in dem sowohl die Exzenterwelle als auch Lagerdeckel und die Trennscheiben zentriert sind und wobei der Getriebegehäusesteg über eine Schraube mit einem unteren Lagerdeckel und über eine zweite Schraube mit einem oberen Deckel verbunden ist. Dieses Schneidgerät hat eine relativ grosse Bauhöhe, die beim Enthäuten von Tieren hinderlich ist. Weiter ist bei der bekannten Konstruktion die Lagerung des Antriebsritzels in einem besonderen Bauteil vorgesehen, wobei der Abstand der Ritzelverzahnung von der eigentlichen Lagerung konstruktionsbedingt relativ gross ist. Bedingt hierdurch erfolgt bei geringen Fluchtungsabweichungen eine verkürzte Lebensdauer des Antriebs, wobei der Antrieb unter Umständen relativ hohe Laufgeräusche aufweist.

In Vermeidung dieser Nachteile liegt der vorliegenden Erfindung die Aufgabe zugrunde, ein Schneidgerät gemäss dem Oberbegriff des Hauptanspruchs so zu verbessern, dass bei optimal flacher Bauweise der Antrieb eine lange Lebensdauer aufweist und möglichst leise verläuft.

Zur Lösung dieser Aufgabe sieht die Erfindung vor, dass beide Kegelräder im Gehäuse gelagert sind, dass das Gehäuse einstückig im wesentlichen auch den Handgriff bildet, dass die andere Seite des Distanzrings an der Mittelplatte anliegt, dass ferner das der Begrenzungswand gegenüberliegende Ende der Mittelplatte von den Enden der Deckel überragt ist, dass ferner das eine Kegelrad mit einem Ansatz versehen ist, zwischen dem und einer Ausnehmung im Gehäuse ein Wälzlager vorgesehen ist, und auf dem anderen Zapfen ein Ring sitzt, der über ein anderes Wälzlager am Umfang in einem Deckel gelagert ist, und dass das Gehäuse und die Deckel im Bereich des Kopfstückes in Ebenen parallel zu den Trennscheiben den grössten Durchmesser des Handgriffs nicht übersteigen.

Das Gerät soll leicht sein, trotzdem muss es den robusten Anforderungen im Schlächtereibetrieb gewachsen sein. Es wird deshalb bevorzugt, dass das Gehäuse und die Deckel aus Aluminium bestehen und die Reibflächen der Trennscheiben an den Deckeln bzw. der Mittelplatte bzw. der Hebel an der Mittelplatte spezialgehärtet sind, wobei diese Härtung als «Hart-Coatierung» ausgeführt sein kann.

Eine beispielsweise Ausführungsform der Erfindung ist in der nachfolgenden Zeichnung dargestellt und wird im einzelnen näher beschrieben. Es zeigen:

Fig. 1 einen Längsschnitt durch das Gerät,

Fig. 2 eine Ansicht von unten in Richtung des Pfeiles II in Fig. 1, teilweise geschnitten.

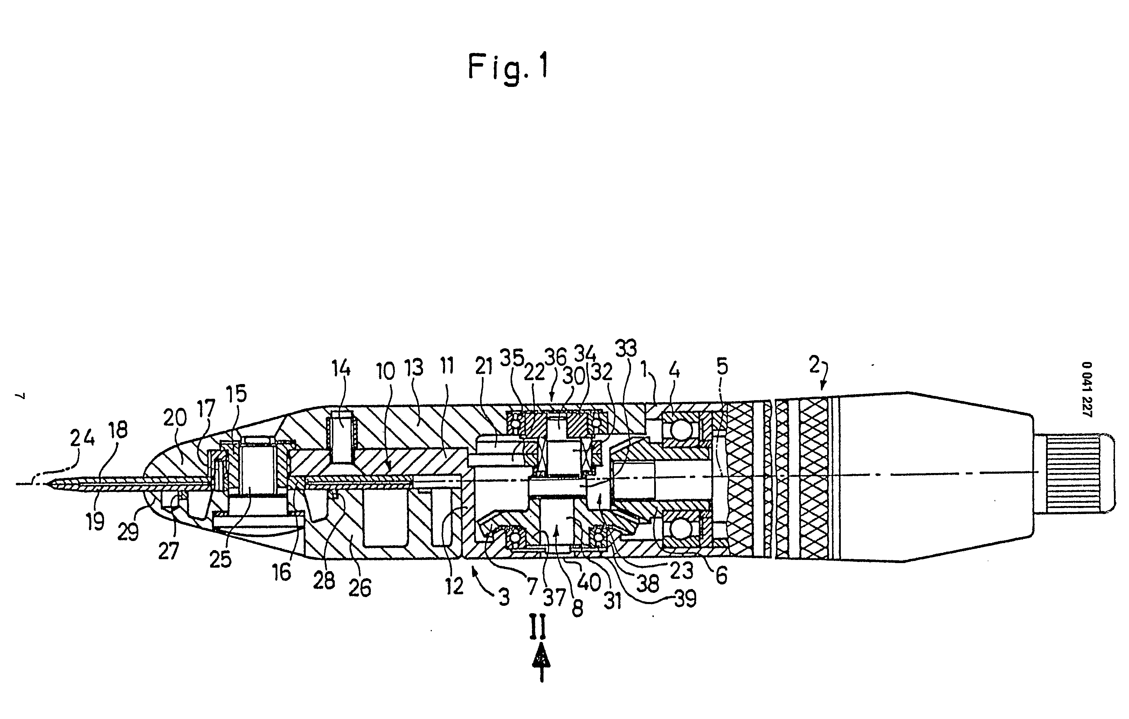

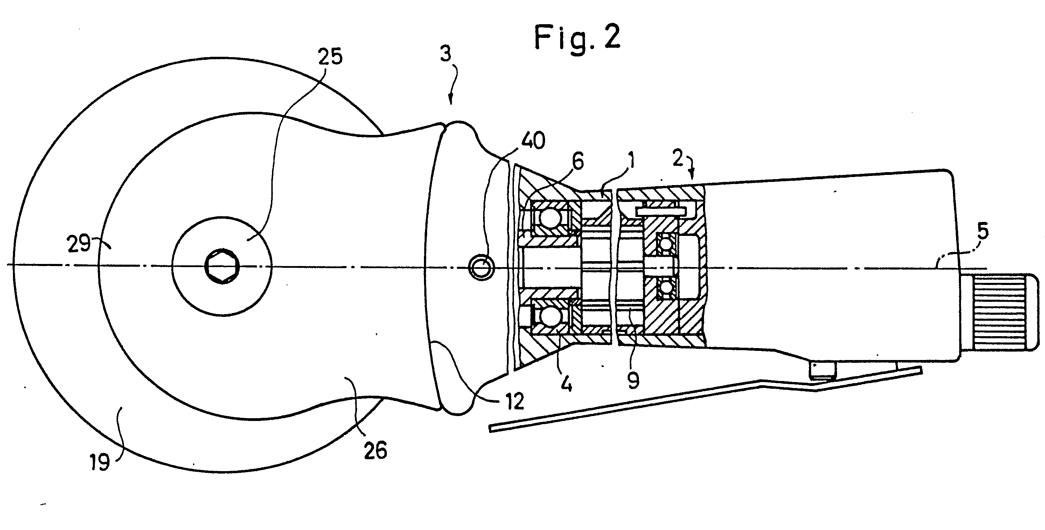

Ein Gehäuse 1, das im wesentlichen auch einen Handgriff 2 abgibt, ist in der Darstellung nach Fig. 1 auf der Unterseite weiter nach vorne gezogen und in die Mitte eines Kopfstückes 3 hineingenommen. In dem Gehäuse 1 ist in einem Wälzlager 4 in einer Mittelebene 5 ein Kegelrad 6 gelagert, das mit einem weiteren Kegelrad 7 kämmt, das auf einer Exzenterwelle 8 drehsicher sitzt, die senkrecht zur Mittelebene 5 angeordnet ist. Im Mittelteil des Handgriffes 2 befindet sich im Gehäuse 1 ein Druckluftmotor 9, Einzelheiten sind aus der rechten Seite der Fig. 2 erkennbar.

Der in der Mitte des Kopfstückes 3 liegende Teil des Gehäuses 1 dient nun als Trennwand 10, die sich aus einer Mittelplatte 11 und der dazu senkrecht gerichteten Begrenzungswand 12 zusammensetzt. An der Mittelplatte 11 ist ein Deckel 13 über eine oder mehrere Schrauben 14 festgeschraubt, in den eine Büchse 15 eingegossen ist. Die Büchse 15 zentriert einen Distanzring 16 und ist gegen Verdrehen durch einen Stift 17 gesichert. Am Umfang des Distanzringes 16 sind zwei aufeinanderliegende Trennscheiben 18, 19 gelagert, die eine stützt sich dabei an der Mittelplatte 11 bzw. am vorderen Ende 20 des Deckels 13 ab. Die Trennscheiben 18, 19 tragen am Umfang eine nicht näher dargestellte Zahnung, deren Flanken den Schneideffekt ausüben. Dabei werden die Trennscheiben 18, 19 über zwei Hebel 21, 22 von der Exzenterwelle 8 aus in eine hin- und hergehende Kreisbewegung versetzt. Die Verhältnisse können ausgelegt sein, dass bei entsprechendem Getriebe 23 und Druckluftmotor 9 die Schwingungszahl der Trennscheiben 18, 19 bei 7500/min (bei 6 bar mit Dämpfer) liegt.

Die Mittelebene 24 der Trennscheiben 18, 19 fällt zusammen mit der Mittelebene 5 des Gehäuses 1. Die Trennscheiben 18, 19 werden axial gesichert durch eine Schraube 25, die in die Büchse 15 einschraubbar ist und einen weiteren Deckel 26 gegen den Distanzring 16 zieht. Dabei befindet sich im Deckel 26 eine Nut 27 zur Aufnahme einer Wellfeder 28, die die Trennscheiben 18, 19 gegeneinander bzw. die eine Seite der Trennscheibe 18 gegen die Mittelplatte 11 bzw. das vordere Ende 20 des Deckels 13 drückt. Wie sich insbesondere aus der Fig. 1 ergibt, verbleibt das freie Ende der Mittelplatte 11 innerhalb der Deckel 13, 26 im guten Abstand von den vorderen Enden 20, 29.

Die senkrecht zu den Trennscheiben 18, 19 liegende Exzenterwelle 8 besteht aus zwei Zapfen 30, 31, einem Exzenter 32 und einem Bund 33, der zwischen dem Exzenter 32 und dem Zapfen 31 liegt. Der Zapfen 30 ist von einem Ring 34 umgeben, an dessen Umfang ein Wälzlager 35 zur Bildung des Lagers 36 im Deckel 13 eingelassen ist. Die Hebel 21, 22 sitzen unter Zwischenschaltung eines Lagers auf dem Exzenter 32. Ihre freien Enden tragen nicht näher dargestellte Zapfen, die durch die Mittelplatte 11 hindurchragen und an den Trennscheiben 18 bzw. 19 angreifen. Auf dem Zapfen 31 sitzt das Kegelrad 7, das mit einem Ansatz 37 versehen ist, zwischen dem und einer Ausnehmung 38 ein weiteres Wälzlager 39 sitzt. Für Ein- und Ausbauzwecke ist im Gehäuse 1 im Bereich des Zapfens 31 ein Loch 40 vorgesehen.

Beim Zusammenbau wird der Deckel 13 mit der fertig montierten Exzenterwelle 8 in das Gehäuse 1 eingesetzt und über die Schrauben 14 die feste Verbindung geschaffen. Die Schmutzteile können daher von aussen in den Raum des Getriebes 23 nicht mehr eintreten. Zur Wechslung oder Säuberung der Trennscheiben 18, 19 braucht lediglich die Schraube 25 gelöst zu werden: mit der Abnahme des Deckels 26 lassen sich auch die Trennscheiben 18, 19 bequem und sicher herausnehmen und wieder einsetzen. Im Bereich der Exzenterwelle 8 baut das Gerät nicht dicker als im Bereich des Handgriffes.

## Patentansprüche

1. Schneidgerät zum Abhäuten von Schlachttieren mit einem Kopfstück (3) an einem Handgriff (2), in dem zwei kreisscheibenförmige Trennscheiben (18, 19), die an ihrem Umfang mit gegeneinander gedrückten Schneidzähnen versehen sind, gelagert sind, im Bereich des Kopfstückes (3) zwei ineinander kämmende Kegelräder (6, 7) vorgesehen sind, von denen eines mit einem motorischen Antrieb (9) verbunden ist und das andere auf einer auf Wälzlagern (35, 39) gelagerten Exzenterwelle (8) sitzt, die senkrecht zur Mittelebene (5) des Handgriffes (2) angeordnet ist, die wieder zusammenfällt mit der Mittelebene (24) der Trennscheiben (18, 19), wobei die Exzenterwelle (8) zwei Zapfen (30, 31), einen Exzenter (32) und einen Bund (33) zwischen dem Exzenter (32) und dem einen Zapfen (31) trägt, auf diesem letzteren Zapfen (31) drehsicher das eine Kegelrad (7) angeordnet ist, wobei von der Exzenterwelle (8) zwei Hebel (21, 22) ausgehen, die die Trennscheiben (18, 19) in hin- und hergehende Kreisbewegungen versetzen und mit einer als Teil eines Gehäuses (1) ausgebildeten Trennwand (10) für eine Abdichtung zwischen dem Getriebe (23) und den Trennscheiben (18, 19), mit einem mit einer Schraube (25) fixierbaren Deckel (26), der die Trennscheiben (18, 19) teilweise abdeckt und axial sichert, wobei die Trennwand (10) aus einer etwa in der Kopfstückmitte liegenden Mittelplatte (11) und einer dazu etwa senkrecht stehenden Begrenzungswand (12) besteht und zwei Deckel (13, 26) vorgesehen sind, von denen einer über Schrauben (14) mit der Mittelplatte (11) verbunden ist und ein weiteres Lager (36) für die Exzenterwelle (8) trägt und der andere Deckel (26) an der Begrenzungswand (12) anliegt und durch die Schraube (25) gegen die eine Seite eines Distanzrings (16) gedrückt ist, an dessen Umfang die Trennscheiben (18, 19) gelagert sind, wobei ferner im Gehäuse (1) mindestens eins der Kegelräder (6, 7) und ein Ende der Exzenterwelle (8) gelagert sind, dadurch gekennzeichnet, dass beide Kegelräder (6, 7) im Gehäuse (1) gelagert sind, dass das Gehäuse (1) einstückig im wesentlichen auch den Handgriff (2) bildet, dass die andere Seite des Distanzrings (16) an der Mittelplatte (11) anliegt, dass ferner das der Begrenzungswand (12) gegenüberliegende Ende der Mittelplatte (11) von den Enden (20, 29) der Deckel (13, 26) überragt ist, dass ferner das eine Kegelrad (7) mit einem Ansatz (37) versehen ist, zwischen dem und einer Ausnehmung (38) im Gehäuse (1) ein Wälzlager (39) vorgesehen ist und auf dem anderen Zapfen (30) ein Ring (34) sitzt, der über ein anderes Wälzlager (35) am Umfang im einen Deckel (13) gelagert ist und dass das Gehäuse (1) und die Deckel (13, 16) im Bereich des Kopfstückes (3) in Ebenen parallel zu den Trennscheiben (18, 19) den grössten Durchmesser des Handgriffes (2) nicht übersteigen.

2. Schneidgerät nach Anspruch 1, dadurch gekennzeichnet, dass das Gehäuse (1) und die Deckel (13, 26) aus Aluminium bestehen und die Reibflächen der Trennscheiben (18, 19) an den Deckeln (13, 26) bzw. der Mittelplatte (11) bzw. der Hebel (21, 22) an der Mittelplatte (11) spezialgehärtet sind.

3. Schneidgerät nach Anspruch 2, dadurch gekennzeichnet, dass die Spezialhärtung aus einer «Hart-Coatierung» besteht.

## Claims

1. Device for taking off the skin of slaughter animals, with a head-piece (3) on a handle (2), in which two disk-shaped separating disks (18, 19) are supported, which at their periphery are provided with cutting-teeth pressed against each other, wherein within the area of the head-piece (3) two conical wheels (6, 7) meshing with each other are provided, one of which is connected to a motor-drive (9) and the other which is arranged on an excenter-shaft (8), supported by roller-bearings (35, 39), said shaft being provided rectangularly with respect to the middle-plain (5) of the handle (2), said mittle-plain again coinciding with the mittle-plain (24) of the separating-disks (18, 19), whereby the excenter-shaft (8) carries two lugs (30, 31), an excenter (32) and a rim (33) between the excenter (32) and one (31) of the lugs, and wherein on this latter lug (31) the one cone-wheel (7) is provided in a manner secured against rotation, whereby two levers (21, 22) extend from the excenter-shaft (8), which impact on the separating disks (18, 19) a reciproking circular motion, and with a separating wall (10), which is a part of the housing (1) for providing a ceil between the gear (23) and the separating-disks (18, 19) with a cover (26), which can be fastened by a screw (25), which partially covers the separating-disks (18, 19) and secures them in axial direction, whereby the separating wall (10) consists of a central plate (11) approximately lying in the middle of the head-piece and a limiting wall (12) approximately extending rectangularly thereto, and two covers (13, 26) are provided, of which one is connected by means of screws (14) with the central plate (11) and carries a further bearing (36) for the excenter-shaft (8) and the other cover (26) rests against the limiting wall (12), and is pressed by the screw (25) against the one side of a distance-ring (16), at the periphery of which the separating disks (18, 19) are supported, whereby further within the housing (1) at least one of the cone-wheels (6, 7) and one end of the excenter-shaft (8) are supported, characterized in that both cone-wheels (6, 7) are supported in the housing (1), that the housing (1) is provided integrally and essentially also is providing the handle (2), that the other side of the distance-ring (16) rests against the central plate (11), that further the end of the central plate (11), which lies opposite to the limiting-wall (12), is surmounted by the covers (13, 26), that further the one cone-wheel (7) is provided with an extension (37), between which and a recess (38) in the housing (1) a roller-bearing (39) is provided, and wherein on the other lug (30) a ring (34) is positioned, which is supported by means of a further roller-bearing (35) at the periphery in a cover (13), and that the housing (1) and the covers (13, 16) within the area of the head-piece (3) and within plains parallel to the separating-disks (18, 19) do not surmount the largest diameter of the handle (2).

2. Cutting-device in accordance to claim 1, characterized in that the housing (1) and the covers (13, 16) are of aluminum and that the friction-surfaces of the separating-disks (18, 19) at the covers (13, 26) of the central plate (11) or the levers (21) at the central plate (11) are specially hardened.

3. Cutting-device in accordance to claim 2, characterized in that the special hardening is formed by a «hard-coating».

**Revendications**

1. Appareil de coupe pour le dépouillement des bêtes d'abattoir, avec une tête (3) sur une poignée (2), où sont montées deux meules (18, 19) en forme de disque, munies sur leur périphérie de dents de coupe serrées les unes contre les autres, au voisinage de la tête (3) sont prévus deux pignons coniques (6, 7) en prise mutuelle, dont l'un est relié à un entraînement (9) par moteur et l'autre repose sur un arbre d'excentrique (8) monté sur des paliers (35, 39), l'arbre étant disposé de façon perpendiculaire au plan médian (5) de la poignée (2), qui à son tour coïncide avec le plan médian (24) des meules (18, 19), l'arbre d'excentrique (8) portant deux tenons (30, 31) et un excentrique (32) et un collet (33) de liaison entre l'excentrique (32) et un des tenons (31) qui porte un des pignons (7) de manière protégée contre la rotation, de l'arbre d'excentrique (8) partent deux leviers (21, 22) qui confèrent aux meules (18, 19) un mouvement circulaire de va-et-vient, et avec une paroi de séparation (10) faisant partie d'un carter (1), destinée à établir une étanchéité entre le mécanisme (23) et les meules (18, 19), avec un couvercle (26) se fixant à l'aide d'une vis (25) et recouvrant en partie les meules (18, 19) en les fixant axialement, la paroi de séparation (10) étant constituée par une plaque médiane (11) située environ au milieu de la tête et par une paroi terminale (12) perpendiculaire à la plaque médiane, et deux couvercles (13, 26) sont prévus, dont l'un est fixé à la plaque médiane (11) par des vis (14) et porte un autre palier (36) pour l'arbre d'excentrique (8), et l'autre couvercle (26) repose sur la paroi terminale (12) et il est serré par la vis (25) contre une des faces d'un anneau écarteur (16) dont la périphérie porte les meules (18, 19), au moins l'un des pignons (6, 7) et une extrémité de l'arbre d'excentrique (8) étant fixés dans le carter (1), appareil caractérisé en ce que les deux pignons coniques (6, 7) sont fixés dans le carter (1), que le carter (1) forme aussi essentiellement, en une seule pièce, la poignée (2), que l'autre face de l'anneau écarteur (16) repose sur la plaque médiane (11), qu'en outre l'extrémité de la plaque médiane (11) opposée à la paroi terminale (12) est surplombée par les extrémités (20, 29) des couvercles (13, 26), qu'en outre l'un des pignons (7) est muni d'un épaulement (37), un palier (39) est prévu dans le carter (1) entre l'épaulement et un orifice (38), et sur l'autre tenon (30) repose un anneau (34), qui est fixé au moyen d'un autre palier (35) sur la périphérie dans un couvercle (13), et que le carter (1) et les couvercles (13, 16) au voisinage de la tête (3) dans des plans parallèles aux meules (18, 19), ne dépassent pas le plus grand diamètre de la poignée (2).

2. Appareil de coupe selon la revendication 1, caractérisé en ce que le carter (1) et les couvercles (13, 26) sont en aluminium et que les surfaces de friction des meules (18, 19) sur les couvercles (13, 26), sur la plaque médiane (11), ainsi que des leviers (21, 22) sur la plaque médiane (11), sont spécialement durcis.

3. Appareil de coupe selon la revendication 2, caractérisé en ce que le durcissement spécial est constitué par un «Hart-Coatierung» (c'est-à-dire un revêtement spécial, dur).

# Fig.1

0 041 227

# Fig. 2

0 041 227